(19) Europäisches Patentamt
European Patent Office
Office européen des brevets

(11) **EP 2 184 620 B1**

(12) **EUROPEAN PATENT SPECIFICATION**

(45) Date of publication and mention
of the grant of the patent:
**26.10.2011 Bulletin 2011/43**

(51) Int Cl.:
***G01V 1/28*** (2006.01)

(21) Application number: **09174924.2**

(22) Date of filing: **03.11.2009**

(54) **Fourier finite-difference migration for three dimensional tilted transverse isotropic media**

Finite-Differenzen-Fouriermigration für dreidimensionale geneigte transversal-isotrope Medien

Migration de Fourier à différences finies pour un milieu isotrope transversal et incliné en trois dimensions

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **06.11.2008 US 198516**
**27.03.2009 US 383622**

(43) Date of publication of application:
**12.05.2010 Bulletin 2010/19**

(73) Proprietor: **PGS Geophysical AS**
**1366 Lysaker (NO)**

(72) Inventors:
• **Mavilio, Alejandro Antonio Valenciano**
**Austin, TX 78750 (US)**
• **Chemingui, Nizar**
**Houston, TX 77098 (US)**
• **Brandsberg-Dahl, Sverre**
**Houston, TX 77007 (US)**

(74) Representative: **Lord, Michael**
**Gill Jennings & Every LLP**
**The Broadgate Tower**
**20 Primrose Street**
**London EC2A 2ES (GB)**

(56) References cited:
• SHAN, G.: "Optimized implicit finite-difference migration for TTI media" SEG, EXPANDED ABSTRACTS, vol. 26, 2007, pages 2290-2294, XP002570792
• RISTOW D., RÜHL T.: "3-D implicit finite-difference migration by multiway splitting" GEOPHYSICS, vol. 62, 1997, pages 554-567, XP002570793
• SHAN G.; BIONDI B. L.: "3D Wavefield extrapolation in laterally-varying tilted TI media" SEG, EXPANDED ABSTRACTS, 2005, pages 104-107, XP002570794
• SHAN G., BIONDI B.: "Plane -wave migration in tilted coordinates" GEOPHYSICS, SEG, vol. 73, no. 5, September 2008 (2008-09), - October 2008 (2008-10) pages S185-S194, XP002570795
• KUMAR D., SEN M.K., FERGUSON R.J.: "Traveltime calculation and prestack migration in tilted transversely isotropic media" GEOPHYSICS, SEG, vol. 69, no. 1, January 2004 (2004-01), - February 2004 (2004-02) pages 37-44, XP002570796
• ZHOU H., ZHANG G., BLOOR R.: "An anisotropic acoustic wave equation for modeling and migration in 2D TTI media" SEG, EXPANDED ABSTRACTS, 2006, pages 194-198, XP002570797
• ALKHALIFAH T.: "An acoustic wave equation for anisotropic media" GEOPHYSICS, SEG, vol. 65, no. 4, July 2000 (2000-07), - August 2000 (2000-08) pages 1239-1250, XP002570798

**Description**

Field of the Invention

The invention relates generally to the field of seismic data migration processing. More particularly, the invention relates to methods for migrating seismic data that can accurately approximate energy propagation in transversely isotropic media wherein the axis of symmetry is inclined with respect to a measurement surface that holds an array of seismic sensors.

Background Art

Seismic surveying is used to evaluate structures of, compositions of, and fluid content of subsurface earth formations. A particular application for seismic surveying is to infer the presence of useful materials, such as petroleum, in the subsurface earth formations. Generally, seismic surveying includes deploying an array of seismic sensors at or near the earth's surface, and deploying a seismic energy source near the sensors also at or near the surface. The seismic energy source is actuated and seismic energy emanates from the source, traveling generally downwardly through the subsurface until it reaches one or more acoustic impedance boundaries. Seismic energy is reflected from the one or more impedance boundaries, where it then travels upwardly until being detected by one or more of the sensors. Structure and composition of the subsurface is inferred from the travel time of the seismic energy, and the amplitude and phase of the various frequency components of the seismic energy with respect to the energy emanating from the seismic source.

In order to infer the structures of subsurface earth formations from seismic travel times measured at the earth's surface from a source position at the surface, it is necessary to determine the velocity of the various formations through which the seismic energy passes. Velocities of the earth formations can vary both with respect to depth in the earth (vertically), and with respect to geographic position (laterally). Seismic data, however, are recorded only with respect to time. Methods known in the art for estimating velocities of the earth formations, both vertically and laterally, rely on inferences about the travel path geometry of the seismic energy as it travels from the seismic source to the various seismic receivers deployed at the earth's surface.

Migration is a process performed on seismic data in which depth estimates to one or more reflective horizons (acoustic impedance boundaries) in the earth are made from the "two way" travel time of seismic energy from the source, to the reflective horizons, and back to the seismic receivers. The depth estimates are computed and displayed with respect to geographic position of the reflective horizons. Depth estimates based on two way travel time must be corrected for the effects of seismic energy travel path differences between various seismic energy source and receiver geographic positions that are used during data acquisition. In order to correct the depth estimates for source and receiver positions, it is necessary to accurately account for the velocity of seismic energy in the earth from the earth's surface to (or the ocean bottom in marine seismic data) to each subsurface reflective horizon.

It is known in the art that some earth formations are anisotropic with respect to seismic velocity. Anisotropy can be observed as different velocity in a single medium depending on the direction of propagation of the seismic energy through the medium. In anisotropic earth formations, the depth estimating (imaging) process needs to take the anisotropy into account in order to accurately position the seismic reflective horizons with respect to depth and geographic position. In transversely isotropic media, many of which are structurally laminated, seismic waves can propagate at higher velocity in the direction of the formation layer planes (laminations) than perpendicular to the laminations. If the laminations are oriented substantially horizontally, vertical transverse isotropic ("VTI") migration techniques can be used. If the formation layers are inclined ("dipping") with respect to the Earth's surface, as in subsurface structures including anticlines and thrust belts, however, a tilted transversely isotropic ("TTI") migration technique is more appropriate. See, for example, Lawton, D. C., Isaac, J. H., Vestrum, R. W., and Leslie, J. M., (2001 ), "Slip-slidin' away-some practical implications of seismic velocity anisotropy on depth imaging", The Leading Edge, 1, pp. 70-73. See also, Yan, L., Lines, L. R., and Lawton, D. C., (2004), "Influence of seismic anisotropy on prestack depth migration", The Leading Edge, 1, pp. 30-36

TTI migration has typically been performed using Kirchhoff methods, because the complexity of the subsurface formations can be handled by using anisotropic ray tracing in travel-time table calculation. More recently, two-way wave equation methods (reverse time migration or "RTM") have been developed. See, for example, Du, X., Bancroft, J. C., and Lines, L R., (2005), "Reverse-time migration for tilted TI media", SEG Expanded Abstracts 24, 1930 and Du, X., Bancroft, J. C., Lawton D. C., and Lines, L. R., (2006), "Evaluations of prestack anisotropic Kirchhoff, phase-shift-plus-interpolation and reverse-time depth migration methods for dipping TI media", SEG Expanded Abstracts 25, 179. However, two-way wave equation methods such that those described in the foregoing publications have proven too computationally expensive to be widely used commercially.

In methods for seismic migration known as "explicit finite-difference" and phase-shift plus interpolation ("PSPI"), the complexity of the algorithms do not significantly increase when operating on a TTI medium (Ferguson and Margrave, 1998). However, in practice, their computational cost increases because in a three dimensional TTI medium the first requires two dimensional convolution with relatively large convolution filters, and the second requires extrapolating many reference wavefields, even if simplifying assumptions about the medium are made. See, Bale, R. A., Gray S. H., and Graziella M., "TRI wave-equation migration ", SEG Expanded Abstracts 26, 2295 (2007).

A more computationally economical alternative is an "implicit finite-difference" method. See, Claerbout, J., 1985, "Imaging the earth interior", Blackwell Scientific Publications (1985). The Clarebout method has been used to approximate the TTI dispersion relation. See, Shan, G., "Optimized implicit finite-difference migration for TTI media", SEG Expanded Abstracts 26, 2290 (2007). The approximation described in the Shan publication consists of a combination of odd and even rational function series. Finite-differences coefficients for the rational function series can be estimated by least-squares optimization. Implementations of TTI migration using techniques such as described in the Shan publication do not significantly increase the computational cost as contrasted with migration in isotropic or VTI media. The foregoing observation led to the conclusion that it is possible to implement a Fourier finite difference migration technique that is not excessively computationally expensive.

## Summary of the Invention

A method for migrating three dimensional seismic data in tilted transversely isotropic media ("TTI") includes generating numerical solutions to an exact relationship for a three dimensional dispersion relationship of seismic energy traveling through TTI media. The numerical solutions include selected input values of polar angle and azimuth angle of a transverse isotropic axis of symmetry and selected values of Thomsen anisotropic parameters, the exact relationship defining wavenumbers for seismic data in three dimensions. Coefficients of a two dimensional Fourier finite difference relationship are determined in different splitting directions that result in a best fit to the exact solution of the three dimensional dispersion relationship. Seismic data are migrated using the determined coefficients by using a Fourier finite difference migration scheme.

A computer program according to another aspect of the invention is stored in a computer readable medium. The program includes logic operable to cause a programmable computer to perform steps including the following. Numerical solutions are generated for an exact relationship for a three dimensional dispersion relationship of seismic energy traveling through TTI media. The numerical solutions include selected input values of polar angle and azimuth angle of a transverse isotropic axis of symmetry and selected values of Thomsen anisotropic parameters, the exact relationship defining wavenumbers for seismic data in three dimensions. Coefficients of a two dimensional Fourier finite difference relationship are determined in different directions that result in a best fit to the exact solution of the three dimensional dispersion relationship. Seismic data are migrated using the determined coefficients in Fourier finite difference migration scheme.

Other aspects and advantages of the invention will be apparent from the following description and the appended claims.

## Brief Description of the Drawings

FIG. 1 shows an example of seismic data acquisition for use with a migration method according to the invention.

FIG. 2 shows a definition of polar angle and azimuth angle of symmetry axis as used in the present invention.

FIG. 3 shows a graphic example of an exact solution to the dispersion relationship in a three dimensional TTI medium.

FIGS. 4A through 4D show graphs comparing an exact solution to the dispersion relationship for TTI media to second order and fourth order Fourier finite difference approximations according to the invention.

FIGS. 5A, 5B and 5C show calculated impulse responses.

FIG. 6 shows a flow chart of an example implementation of a migration method.

FIG. 7 shows a programmable general-purpose computer with readable storage media and a display.

## Detailed Description

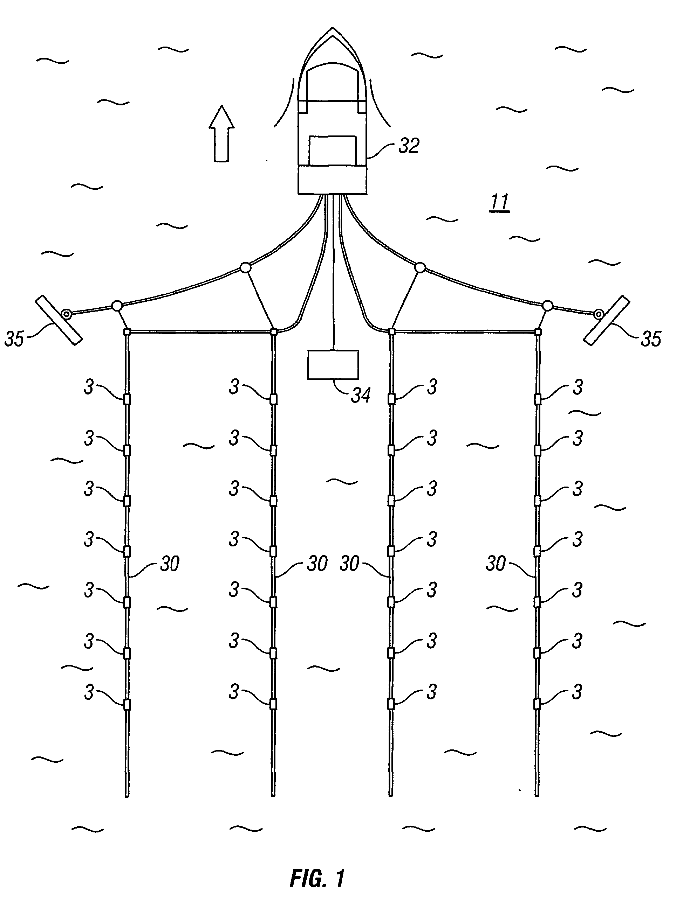

FIG. 1 shows an example of a marine seismic survey system in which a plurality of streamer cables 30 are towed behind a seismic survey vessel 32 moving on the surface of a body of water 11 such as a lake or the ocean. One or more seismic energy sources 34 also typically towed behind the seismic vessel 32, or by another vessel. The seismic source 34, which typically is an air gun or array of air guns, but may also be a water gun or other type of seismic source known in the art, is actuated at selected times so as to impart seismic energy into the formations below the bottom of the water 11. The seismic energy is reflected by reflectors in the subsurface (below the water bottom) and is eventually detected by seismic sensors 3 disposed at longitudinally spaced apart positions in the streamers 30. Typically a record of signals detected by each of the sensors 3 is made, indexed with respect to the actuation time of the seismic source 34. Such recording may be made by a suitable recording device (not shown) on the seismic survey vessel 32.

Paravanes 35 are used to maintain the streamer cables 30 in the desired lateral position with respect to the centerline of the vessel 32. The invention may also be implemented, however, using seismic cables that are maintained at a substantially stationary position in a body of water, either floating at a selected depth or lying on the bottom of the body of water, in which case the seismic source 34 may be towed behind a different vessel to generate seismic energy pulses at varying locations. The seismic energy source 34 may also be maintained in a fixed position. Further, the example arrangement shown in FIG. 1 including four streamer cables 30, paravanes 35 and the source 34 all towed by the same vessel 32 is not a limit on the scope of the present invention. It is also to be clearly understood that the marine acquisition system example shown in FIG. 1 is not a limitation on the use of seismic data acquired using marine systems. It is within the scope of the present invention to acquire seismic data on the land surface for use with a migration method according to the invention.

Depth migration, as explained in the Background section herein, is a process performed on seismic data in which depth estimates to one or more reflective horizons (acoustic impedance boundaries) in the subsurface are made from the travel time of seismic energy from the source 34, to the reflective horizons, and back to the seismic sensors 3. "Phase shift" migration uses a three dimensional dispersion relation of the scalar wave equation in order to perform seismic wavefield downward extrapolation. The presently described migration method is an example of phase shift migration.

The three dimensional dispersion relation for a tilted transversely isotropic ("TTI") medium, assuming zero shear wave velocity (as explained in Alkhalifah, T., "Acoustic approximations for processing in transversely isotropic media" Geophysics, 63, 623-631 (1998)), can be represented by a fourth order polynomial equation. One such equation is described in Shan, G., and Biondi, B. L., 3D "Wavefield extrapolation in laterally-varying tilted TI media", 75th Annual International Meeting, SEG, Expanded Abstracts, 104-107 (2005) and is show below:

$$a_4 s_z^4 + a_3(s_x, s_y)s_z^3 + a_2(s_x, s_y)s_z^2 + a_1(s_x, s_y)s_z + a_0(s_x, s_y) = 0 \tag{1}$$

In the foregoing equation, $s_1 = k_z v_{p0}|\omega$ *is the normalized vertical* (z) *wave number,* $s_x = k_x v_{p0}|\omega$ *and* $s_y = k_y v_{p0}|\omega$ *are the normalized horizontal* (x, y) *wave numbers, where* k *represents wavenumber in the respective domain* $v_{p0}$ *represents compressional velocity in the symmetry axis direction (P wave) and* $\omega$ *represents the angular frequency. The polynomial coefficients* $a_1$ *through* $a_4$ *can be determined by the following expressions:*

$$a_0 = 1 - (1+2\varepsilon)(s_y \cos\psi + s_x \sin\psi)^2 - (1+2\varepsilon)\cos^2\theta(s_x \cos\psi - s_y \sin\psi)^2$$
$$- \sin^2\theta(s_x \cos\psi - s_y \sin\psi)^2 - 2(\delta - \varepsilon)\sin^2\theta(s_y \cos\psi + s_x \sin\psi)^2$$
$$(s_x \cos\psi - s_y \sin\psi)^2 - 2(\delta - \varepsilon)\cos^2\theta\sin^2\theta(s_x \cos\psi - s_y \sin\psi)^4$$
$$a_1 = 2\cos\theta\sin\theta(s_x \cos\psi - s_y \sin\psi)(-2\varepsilon + 2(\delta - \varepsilon)(s_y \cos\psi + s_x \sin\psi)^2$$
$$+ 2(\delta - \varepsilon)\cos^2\theta(s_x \cos\psi - s_y \sin\psi)^2 - 2(\delta - \varepsilon)\sin^2\theta(s_x \cos\psi - s_y \sin\psi))$$
$$a_2 = -\cos^2\theta - (1+2\varepsilon)\sin^2\theta - 2(\delta - \varepsilon)\cos^2\theta(s_y \cos\psi + s_x \sin\psi)^2$$
$$- 2(\delta - \varepsilon)\cos^4\theta(s_x \cos\psi - s_y \sin\psi)^2 + 8(\delta - \varepsilon)\cos^2\theta\sin^2\theta$$
$$(s_x \cos\psi - s_y \sin\psi)^2 - 2(\delta - \varepsilon)\sin^4\theta(s_x \cos\psi - s_y \sin\psi)^2$$
$$a_3 = -(\delta - \varepsilon)\sin 4\theta(s_x \cos\psi - s_y \sin\psi)$$
$$a_4 = -(\delta - \varepsilon)\cos^2\theta\sin^2\theta \tag{2}$$

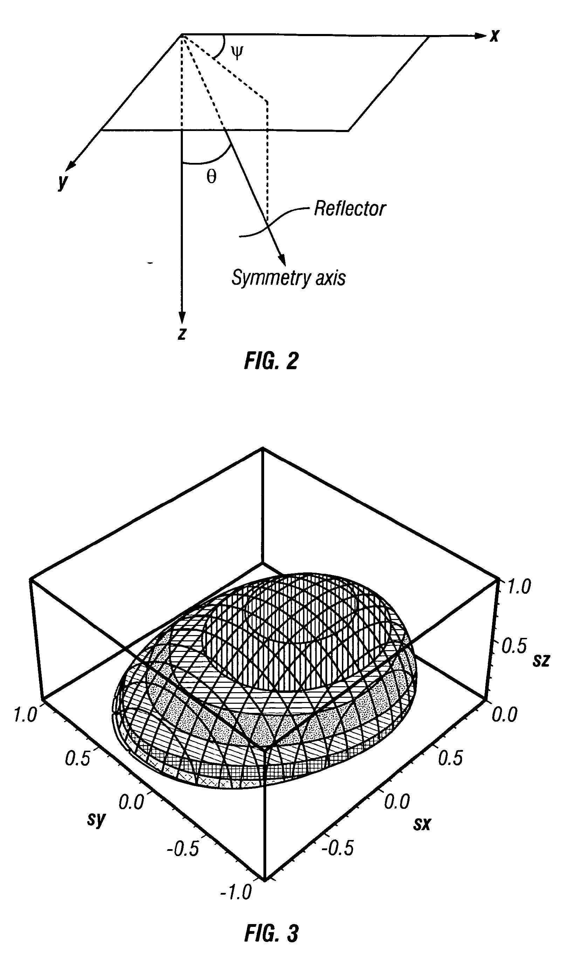

In the above expressions for determining the polynomial coefficients, $\varepsilon$, and $\delta$ are the Thomsen anisotropic parameters, $\theta$ is the polar angle (angle of inclination of the symmetry axis with respect to a selected reference), and $\Psi$ is the azimuth angle of the transverse isotropic symmetry axis. The polar and azimuth angles are shown in FIG. 2 as to how they relate to the coordinate system of seismic imaging. Generally, the coordinate system includes the x axis as horizontal and along the direction of the streamer cables (30 in FIG. 1), the y axis as horizontal and transverse to the streamer cables, and the z axis as vertical. The Thomsen anisotropic parameters are explained, for example, in U.S. Patent No. 6,785,612 issued to Zhang and assigned to the assignee of the present invention. See also, Thomsen, L.,

"Weak elastic anisotropy", Geophysics, Oct. 1986, pp. 1954-1966, vol. 51, No. 10 (1986) for an explanation of the Thomsen parameters.

The fourth order polynomial expression in equation (1) has four solutions, each solution corresponding to one of upgoing compressional (P) waves, downgoing P waves, upgoing shear (S) waves, and downgoing S waves, respectively. The S waves are not part of the method because zero S-wave velocity is assumed for purposes of the present migration technique. In a practical implementation of a method according to the invention, only the root for downward propagating P waves is solved. FIG. 3 shows a graph of a solution to equation (1) corresponding to a downgoing P wave, and values of $\varepsilon = 0.4$, $\delta = 0.2$, $\theta = 60$ degrees, and $\psi = 50$ degrees.

Based on a two dimensional implicit finite -difference approximation for the TTI dispersion relation described in, Shan, G., "Optimized implicit finite-difference migration for TTI media", SEG Expanded Abstracts 26, 2290 (2007) , a three dimensional Fourier finite-difference ("FFD") migration for TTI media has been developed that consists of three terms: a phase shift term, a thin lens term, and a finite-difference term. The TTI approximation of the present invention uses a combination of odd and even rational function series of selected order $n$. The TTI dispersion relation approximation, reduced to a 2D relation along any splitting axis, can be expressed as:

$$s_z = m\sqrt{1 - \frac{s_x^2}{m^2}} + s_{z0} - m - \sum_i^n \left(1 - \frac{1}{m}\right)\frac{-c_i s_x + a_i s_x^2 + d_i s_x^3}{1 - b_i\left(1 + \frac{1}{m^2}\right)s_x^2} \qquad (3)$$

The ratio m between the inhomogeneous medium velocity, and a reference medium velocity can be determined by the expression:

$$m = v_{p0}\ (x,\ y)/c_{p0m} \qquad (4)$$

The medium velocity $v_{p0}$ is the velocity along the direction of the axis of symmetry of a TTI medium. The accuracy of the FFD approximation at high angles of propagation (high angle with reference to the axis of symmetry) depends on the selected order ($n$) in equation (3), the value of the coefficients $a_i$, $b_i$, $c_i$ and $d_i$ and the combination of the parameters $\varepsilon$, $\delta$, $\theta$, and $\psi$. Equation (3) was derived under the assumption that the reference medium is isotropic. This assumption is not required for our method, however it simplifies the implementation of the table-based TTI FFD migration.

To create the table, for selected values of $m$, $\varepsilon$, $\delta$, $\theta$, and $\psi$ within the known ranges of the foregoing parameters, an exact solution to equation (1) is evaluated to numerically compute the corresponding dispersion relation function. The coefficients $a_i$, $b_i$, $c_i$ and $d_i$ that produce a best fit of equation (3) to the numerical d ispersion relation are estimated, for example, by using a non-linear least-squares algorithm. The term $S_z O$ can be computed analytically, by evaluating equation (1) at $s_x = 0$, $s_y = 0$. The selected values of the parameters $m$, $\varepsilon$, $\delta$, $\theta$, and $\psi$ used to generate the table of numerical data can be increments within the known range of values of each of the foregoing parameters, for example, increments of 0.005, 0.01 or 0.02 of the full range of values for each such parameter.

In a three dimensional medium, as shown by the graph in FIG. 3, the dispersion relation is asymmetric not only with respect to the polar angle but also with respect to the azimuth angle. Because of the asymmetry, different optimized coefficients $a_i$, $b_i$, $c_i$ and $d_i$ may be necessary depending on the direction of propagation. In order to reduce numerical anisotropy when using a two-way splitting algorithm, a multi-way splitting approach can be employed. Thus the coefficients $a_i$, $b_i$, $c_i$ and $d_i$ are tabulated for each splitting direction. See, for example, Ristow, D., and T. Ruhl, "3-D implicit finite-difference migration by multiway splitting", Geophysics, 62, 554 (1997).

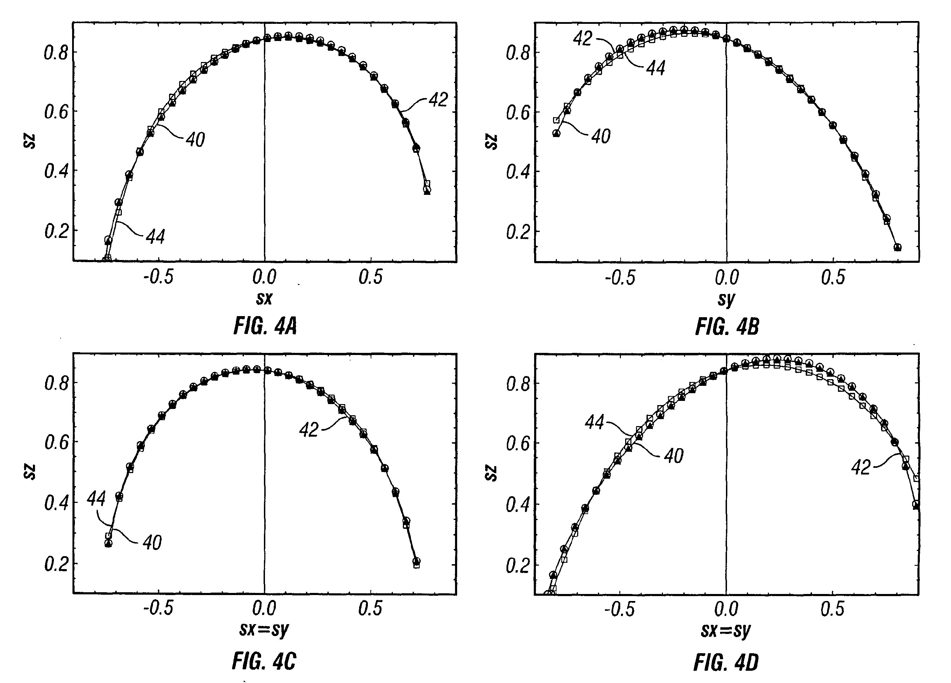

FIGS. 4A through 4D show the fit of the approximate (obtained by non-linear least-squares) to the exact dispersion relations in FIG. 3 for splitting directions 0, 45 degrees, 90 degrees, and 135 degrees, respectively. The exact dispersion relation is shown by curves labeled 40 (and indicated by open circles). A second order approximation using equation (3), (after substituting for $n=1$ and $d_1=0$), is shown by curves labeled 44 (and indicated by open squares). A fourth order approximation ($n=2$; $d_1=d_2=0$) is shown by curves labeled 42 (and indicated by solid triangles). The fourth order approximation provides less error than the second order approximation. In FIG. 4D curves for the exact solution, second order approximation and fourth order approximation are identified as explained above, and these are the same for each of FIGS. 4A through 4D. Note that in many locations, curves 40, 44 and 42 are superimposed.

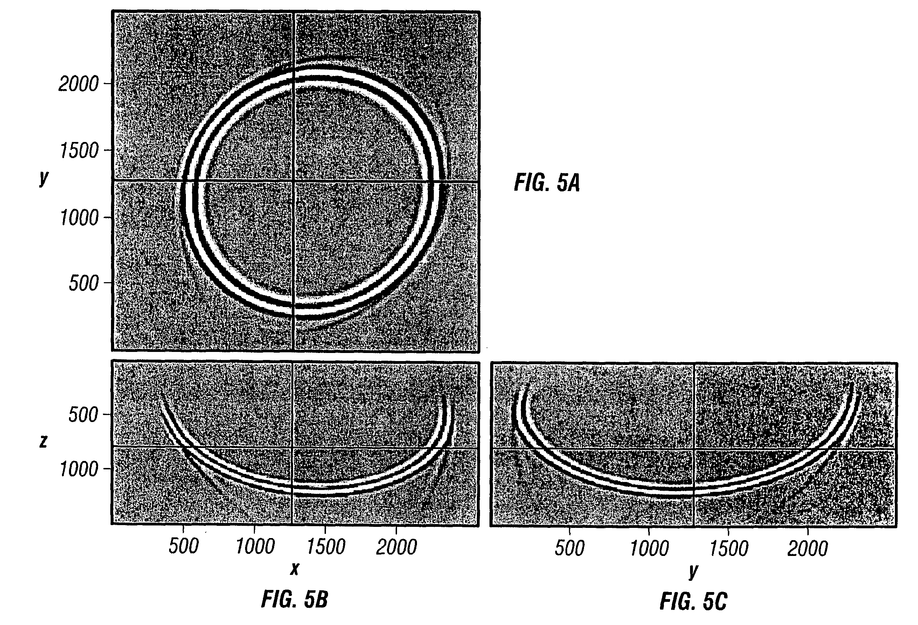

FIG. 5A shows an impulse response calculated for a collocated seismic source and a seismic receiver disposed in the center of the crossed axes. The impulse response of a migration program is its output when the input data is a unit impulse (or a band-limited impulse). As a linear process, migration is completely characterized by its impulse response. The latter describes a definite relationship between input data and output. That is, for any input data, the output image can be calculated in terms of the input and the impulse response. The impulse response test is generally used to diagnose how accurately the migration program would image the subsurface formations. The impulse response is displayed in the horizontal plane $(x, y$ coordinate axes). FIG. 5B shows the same calculated impulse response displayed in the $x, z$ plane. This plane represents the "in-line" direction, which is generally along the length of the seismic sensor streamers (30 in FIG. 1 ). In FIG. 5B, the source position is at $z = 0$ and $x = 1250$ (along the vertical axis position). FIG. 5C shows the same impulse response displayed in the $y, z$ plane, with the source position at $z = 0$ and along the vertical axis position ($y = 1250$). The plot in FIG. 5C is in the so-called "cross-line" direction, or transverse to the direction of the streamers (30 in FIG. 1).

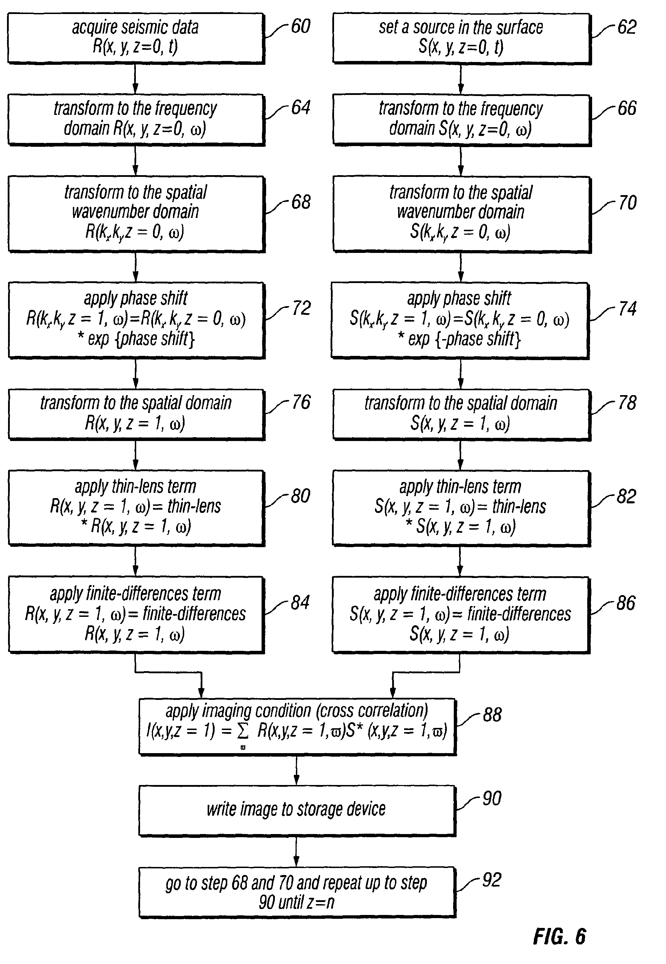

An example implementation of a migration method will be explained with reference to a flow chart in FIG. 6. Seismic data are acquired at 60, for example, using a system such as shown in FIG. 1. The seismic data are recorded in the time domain and are represented by sensor or receiver positions that may be defined in a coordinate plane with respect to a selected reference, for example, the UTM coordinates system. The data in the time domain may be represented, for each receiver, by R($x, y, z=0, t$), and referred to as the receiver wavefield at the surface. The receiver wavefield is transformed at 64 into the frequency domain, for example, by using a fast Fourier transform. The transformed receiver wavefield may be represented by R($x, y, z=0, \omega$). The transformed receiver wavefield is further transformed at 68, such as by fast Fourier transform, to the wavenumber domain to produce R($k_x$ $k_y$, $z = 0$, ($\omega$). At 72, the phase shift term (the first part of equation (3) within the square root) is applied to the receiver wavefield in the wavenumber domain to propagate it to a first depth increment from the surface ($z = 1$). The result may be represented by R($k_x, k_y$, $z = 1$. $\omega$). At 76 an inverse Fourier transform is applied to the propagated receiver wavefield from the wavenumber domain to the spatial domain ($x$ and $y$). At 80, the thin lens term of equation (3) is applied to the phase shifted receiver wavefield. The thin lens term is $S_z0 - m$ from equation (3). At 84, the finite difference term (the summation) from equation (3) is applied to the thin lens result.

At 62, a seismic wavefield is initiated from a synthetic seismic energy source disposed at the surface at a source position denominated $(x, y, 0)$. The source signature or wavefield may be, for example, a bandpass filtered impulse (amplitude spike at time = 0) or other synthetic source wavelet known in the art used for wave equation migration. The source wavefield is generated in the time domain and may be represented in the time domain by $S(x, y, z=0, t)$. The source wavefield is transformed at 66 to the frequency domain, for example, by using a fast Fourier transform. The transformed source wavefield may be represented by $S(x, y, z=0, \omega)$. The transformed source wavefield is further transformed at 70, such as by fast Fourier transform, to the wavenumber domain to produce a wavefield represented by S($kx, k_y$, $z = 0$, $\omega$). At 74, a phase shift is performed on the wavenumber domain transformed source wavefield to propagate it to a first depth increment from the surface represented by ($z = 1$). This phase shift has an opposite sign to the one applied to the receiver wavefield. The result of the propagation may be represented by S($k_x, k_y$, $z = 1$. $\omega$). At 78 an inverse Fourier transform is applied to the propagated, transformed source wavefield from the wavenumber domain to the spatial domain ($x$ and $y$). At 82, a thin lens term is applied to the phase shifted source wavefield. The thin lens term is the quantity ($S_2 0 - m$) from equation (3). At 86, the finite difference term (the summation) from equation (3) is applied to the thin lens result.

The complex conjugate of the source wavefield, propagated to the depth increment $z = I$ (from 86), is then cross-correlated, at 88, with the propagated receiver wavefield also at the depth increment $z = 1$ (from 84) to obtain an image value at that depth. At 90 the image at depth level z=1 can be saved in memory, or written to a local or external computer storage device. The foregoing procedures are repeated in their entirety, at 92, until a selected depth within the subsurface is reached, that is, $z = n$, where n represents the maximum depth desired for the image divided by the number of depth increments per unit of depth. The images generated by the foregoing procedure may be stored in a computer readable device or displayed for further processing and/or interpretation.

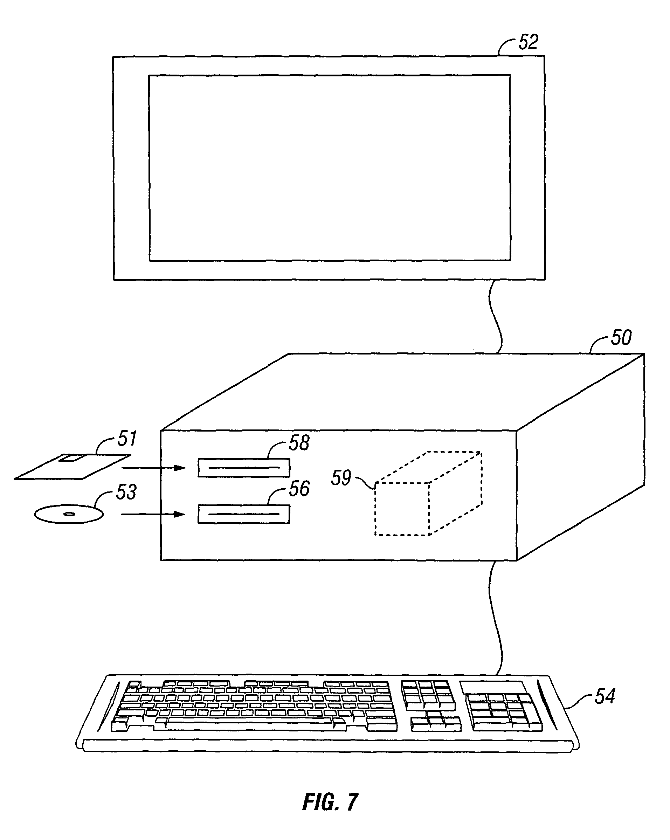

A method for migrating seismic data according to the invention may be implemented on a programmable computer. Referring to FIG. 7, the foregoing migration method as explained above can be embodied in computer-readable code stored on a computer readable medium, such as floppy disk 51 or a CD-ROM 53 loaded into respective reading or read/write devices 58, 56, or a magnetic hard drive 59 forming part of a general purpose programmable computer. The computer, as known in the art, includes a central processing unit 50, a user input device such as a keyboard 54 and a user display 52 such as a flat panel LCD display or cathode ray tube display. According to this aspect of the invention, the computer readable medium includes logic operable to cause the computer to execute acts as set forth above and explained with reference to FIG. 6.

A method according to the invention may provide a procedure to implement seismic migration in TTI media that is less computationally expensive than methods known in the art.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

# EP 2 184 620 B1

**Claims**

1. A method for migrating three dimensional seismic data in tilted transversely isotropic ("TTI") media, the seismic data representing signals acquired by deploying seismic sensors and a seismic energy source, actuating the source and detecting seismic energy in response thereto, the method comprising:

   transforming the seismic data into the wavenumber-frequency domain;
   generating numerical solutions to an exact relationship for a three dimensional dispersion relationship of seismic energy traveling through TTI media, the numerical solutions including selected input values of polar angle and azimuth angle of a transverse isotropic axis of symmetry and selected values of Thomsen anisotropic parameters, the exact relationship defming wavenumbers for seismic data in three dimensions;
   determining coefficients of a two dimensional Fourier finite difference relationship that result in a best fit of wavenumbers to the numerical solutions for different splitting directions;
   migrating the transformed seismic data using the wavenumbers from the Fourier finite difference relationship to generate an image; and
   at least one of storing and displaying the image.

2. The method of claim 1 wherein the Fourier finite difference relationship includes a phase shift term, a thin lens term and a finite difference term.

3. The method of claim 1 wherein the determining coefficients comprises multiple-way splitting.

4. The method of claim 1 wherein the determining coefficients comprises non-linear least squared fitting.

5. A computer program stored in a computer readable medium, the program containing logic operable to cause a programmable computer to perform steps comprising:

   transforming three dimensional seismic data into the wavenumber-frequency domain, the seismic data representing signals acquired by deploying seismic sensors and a seismic energy source, actuating the source and detecting seismic energy in response thereto;
   generating numerical solutions to an exact relationship for a three dimensional dispersion relationship of seismic energy traveling through tilted transversely isotropic media, the numerical solutions including selected input values of polar angle and azimuth angle of a transverse isotropic axis of symmetry and selected values of Thomsen anisotropic parameters, the exact relationship defining wavenumbers for seismic data in three dimensions;
   determining coefficients of a two dimensional Fourier finite difference relationship that result in a best fit of wavenumbers to the numerical solutions for different splitting directions;
   migrating the transformed seismic data using the wavenumbers from the Fourier finite difference relationship to generate an image; and
   at least one of storing and displaying the image.

6. The computer program of claim 5 wherein the Fourier finite difference relationship includes a phase shift term, a thin lens term and a finite difference term.

7. The computer program of claim 5 wherein the determining coefficients comprises multiple-way splitting.

8. The computer program of claim 5 wherein the determining coefficients comprises non-linear least squared fitting.

**Patentansprüche**

1. Verfahren zum Migrieren dreidimensionaler seismischer Daten in geneigten transversal-isotropen Medien ("TTI" - tilted transversely isotropic), wobei die seismischen Daten Signale darstellen, die erfasst wurden durch Einsetzen von Seismiksensoren und einer Quelle für seismische Energie, Betätigen der Quelle und Detektieren seismischer Energie als Reaktion darauf, wobei das Verfahren Folgendes umfasst:

   Transformieren der seismischen Daten in den Wellenzahl-Frequenz-Bereich;
   Generieren numerischer Lösungen für eine präzise Beziehung für eine dreidimensionale Ausbreitungsbezie-

7

hung von sich durch TTI-Medien ausbreitender seismischer Energie, wobei die numerischen Lösungen ausgewählte Eingabewerte von Polarwinkel und Azimutwinkel einer transversal-isotropen Symmetrieachse und ausgewählte Werte von Thomsen-Anisotropieparametern enthält, wobei die präzise Beziehung Wellenzahlen für seismische Daten in drei Dimensionen definiert;

Bestimmen von Koeffizienten einer zweidimensionalen Fourier-Finite-Differenz-Beziehung, die zu einer besten Anpassung von Wellenzahlen an die numerischen Lösungen für verschiedene Teilungsrichtungen führt;

Migrieren der transformierten seismischen Daten unter Verwendung der Wellenzahlen aus der Fourier-Finite-Differenz-Beziehung, um ein Bild zu generieren; und

mindestens Speichern oder Anzeigen des Bilds.

2. Verfahren nach Anspruch 1, wobei die Fourier-Finite-Differenz-Beziehung einen Phasenverschiebungsterm, einen Dünne-Linsen-Term und einen Finite-Differenz-Term enthält.

3. Verfahren nach Anspruch 1, wobei das Bestimmen von Koeffizienten das Mehrwege-Teilen umfasst.

4. Verfahren nach Anspruch 1, wobei das Bestimmen von Koeffizienten das nichtlineare Anpassen über die Fehlerquadratmethode umfasst.

5. Computerprogramm, das in einem computerlesbaren Medium gespeichert ist, wobei das Programm eine Logik enthält, die betätigt werden kann zu bewirken, dass ein programmierbarer Computer Schritte durchführt, die Folgendes umfassen:

Transformieren dreidimensionaler seismischer Daten in den Wellenzahl-Frequenz-Bereich, wobei die seismischen Daten Signale darstellen, die erfasst wurden durch Einsetzen von Seismiksensoren und einer Quelle für seismische Energie, Betätigen der Quelle und Detektieren seismischer Energie als Reaktion darauf;

Generieren numerischer Lösungen für eine präzise Beziehung für eine dreidimensionale Ausbreitungsbeziehung von sich durch geneigte transversal-isotrope Medien ausbreitender seismischer Energie, wobei die numerischen Lösungen ausgewählte Eingabewerte von Polarwinkel und Azimutwinkel einer transversal-isotropen Symmetrieachse und ausgewählte Werte von Thomsen-Anisotropieparametern enthält, wobei die präzise Beziehung Wellenzahlen für seismische Daten in drei Dimensionen definiert;

Bestimmen von Koeffizienten einer zweidimensionalen Fourier-Finite-Differenz-Beziehung, die zu einer besten Anpassung von Wellenzahlen an die numerischen Lösungen für verschiedene Teilungsrichtungen führt;

Migrieren der transformierten seismischen Daten unter Verwendung der Wellenzahlen aus der Fourier-Finite-Differenz-Beziehung, um ein Bild zu generieren; und mindestens Speichern oder Anzeigen des Bilds.

6. Computerprogramm nach Anspruch 5, wobei die Fourier-Finite-Differenz-Beziehung einen Phasenverschiebungsterm, einen Dünne-Linsen-Term und einen Finite-Differenz-Term enthält.

7. Computerprogramm nach Anspruch 5, wobei das Bestimmen von Koeffizienten das Mehrwege-Teilen umfasst.

8. Computerprogramm nach Anspruch 5, wobei das Bestimmen von Koeffizienten das nichtlineare Anpassen über die Fehlerquadratmethode umfasst.

**Revendications**

1. Procédé de migration de données sismiques tridimensionnelles dans des milieux transversalement isotropes inclinés « TTI » - tilted transversely isotropic, les données sismiques représentant des signaux acquis en déployant des capteurs sismiques et une source d'énergie sismique, en déclenchant la source et en détectant de l'énergie sismique en réponse, le procédé comprenant les étapes consistant à :

transformer les données sismiques dans le domaine de fréquence de nombre d'ondes ;
générer des solutions numériques à une relation exacte pour une relation de dispersion tridimensionnelle d'énergie sismique parcourant des milieux TTI, les solutions numériques incluant des valeurs d'entrée sélectionnées d'angle polaire et d'angle d'azimut d'un axe de symétrie isotrope transversal et des valeurs sélectionnées de paramètres anisotropes de Thomsen, la relation exacte définissant des nombres d'ondes pour des données sismiques en trois dimensions ;
déterminer des coefficients d'une relation de différence finie de Fourier bidimensionnelle conduisant à un meilleur ajustement des nombres d'ondes aux solutions numériques pour différentes directions de séparation ;
migrer les données sismiques transformées en utilisant les nombres d'ondes de la relation de différence finie de Fourier pour générer une image ; et
stocker et/ou afficher l'image.

2. Procédé selon la revendication 1, dans lequel la relation de différence finie de Fourier comprend un terme de déphasage, un terme de lentille mince et un terme de différence finie.

3. Procédé selon la revendication 1, dans lequel la détermination des coefficients comprend la séparation en directions multiples.

4. Procédé selon la revendication 1, dans lequel la détermination des coefficients comprend l'ajustement des moindres carrés non linéaire.

5. Programme informatique stocké dans un support lisible par ordinateur, le programme contenant une logique permettant de faire réaliser à un ordinateur programmable les étapes consistant à :

transformer des données sismiques tridimensionnelles dans le domaine de fréquence de nombre d'ondes, les données sismiques représentant des signaux acquis en déployant des capteurs sismiques et une source d'énergie sismique, en déclenchant la source et en détectant l'énergie sismique en réponse ;
générer des solutions numériques à une relation exacte pour une relation de dispersion tridimensionnelle d'énergie sismique parcourant des milieux isotropes transversalement inclinés, les solutions numériques incluant des valeurs d'entrée d'angle polaire et d'angle d'azimut d'un axe de symétrie isotrope transversal et des valeurs sélectionnées de paramètres anisotropes de Thomson, la relation exacte définissant des nombres d'ondes pour des données sismiques en trois dimensions ;
déterminer des coefficients d'une relation de différence finie de Fourier bidimensionnelle conduisant au meilleur ajustement des nombres d'ondes aux solutions numériques pour différentes directions de séparation ;
migrer les données sismiques transformées en utilisant les nombres d'ondes de la relation de différence finie de Fourier pour générer une image ; et
stocker et/ou afficher l'image.

6. Programme informatique selon la revendication 5, dans lequel la relation de différence finie de Fourier comprend un terme de déphasage, un terme de lentille mince et un terme de différence finie.

7. Programme informatique selon la revendication 5, dans lequel la détermination des coefficients comprend la séparation en directions multiples.

8. Programme informatique selon la revendication 5 dans lequel la détermination des coefficients comprend l'ajustement des moindres carrés non linéaire.

**FIG. 1**

**FIG. 2**

**FIG. 3**

**FIG. 4A**

**FIG. 4B**

**FIG. 4C**

**FIG. 4D**

FIG. 5A

FIG. 5B

FIG. 5C

| | |
|---|---|
| acquire seismic data $R(x, y, z=0, t)$ — 60 | set a source in the surface $S(x, y, z=0, t)$ — 62 |
| transform to the frequency domain $R(x, y, z=0, \omega)$ — 64 | transform to the frequency domain $S(x, y, z=0, \omega)$ — 66 |
| transform to the spatial wavenumber domain $R(k_x k_y z = 0, \omega)$ — 68 | transform to the spatial wavenumber domain $S(k_x k_y z = 0, \omega)$ — 70 |
| apply phase shift $R(k_x k_y z = 1, \omega) = R(k_x k_y z = 0, \omega)$ $* \exp \{phase\ shift\}$ — 72 | apply phase shift $S(k_x k_y z = 1, \omega) = S(k_x k_y z = 0, \omega)$ $* \exp \{-phase\ shift\}$ — 74 |
| transform to the spatial domain $R(x, y, z = 1, \omega)$ — 76 | transform to the spatial domain $S(x, y, z = 1, \omega)$ — 78 |
| apply thin-lens term $R(x, y, z = 1, \omega) = thin\text{-}lens$ $* R(x, y, z = 1, \omega)$ — 80 | apply thin-lens term $S(x, y, z = 1, \omega) = thin\text{-}lens$ $* S(x, y, z = 1, \omega)$ — 82 |
| apply finite-differences term $R(x, y, z = 1, \omega) = finite\text{-}differences$ $R(x, y, z = 1, \omega)$ — 84 | apply finite-differences term $S(x, y, z = 1, \omega) = finite\text{-}differences$ $S(x, y, z = 1, \omega)$ — 86 |

apply imaging condition (cross correlation)
$$I(x,y,z = 1) = \sum_\omega R(x,y,z = 1,\omega)S^*(x,y,z = 1,\omega)$$ — 88

write image to storage device — 90

go to step 68 and 70 and repeat up to step 90 until z=n — 92

**FIG. 6**

**FIG. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6785612 B, Zhang

**Non-patent literature cited in the description**

- **Lawton, D. C. ; Isaac, J. H. ; Vestrum, R. W. ; Leslie, J. M.** Slip-slidin' away-some practical implications of seismic velocity anisotropy on depth imaging. *The Leading Edge,* 2001, vol. 1, 70-73
- **Yan, L. ; Lines, L. R. ; Lawton, D. C.** Influence of seismic anisotropy on prestack depth migration. *The Leading Edge,* 2004, vol. 1, 30-36
- **Du, X. ; Bancroft, J. C. ; Lines, L R.** Reverse-time migration for tilted TI media. *SEG Expanded Abstracts,* 2005, vol. 24, 1930
- **Du, X. ; Bancroft, J. C. ; Lawton D. C. ; Lines, L. R.** Evaluations of prestack anisotropic Kirchhoff, phase-shift-plus-interpolation and reverse-time depth migration methods for dipping TI media. *SEG Expanded Abstracts,* 2006, vol. 25, 179
- **Bale, R. A. ; Gray S. H. ; Graziella M.** TRI wave-equation migration. *SEG Expanded Abstracts,* 2007, vol. 26, 2295
- **Claerbout, J.** Imaging the earth interior. Blackwell Scientific Publications, 1985
- **Shan, G.** Optimized implicit finite-difference migration for TTI media. *SEG Expanded Abstracts,* 2007, vol. 26, 2290
- **Alkhalifah, T.** Acoustic approximations for processing in transversely isotropic media. *Geophysics,* 1998, vol. 63, 623-631
- **Shan, G. ; Biondi, B. L.** Wavefield extrapolation in laterally-varying tilted TI media. *75th Annual International Meeting, SEG, Expanded Abstracts,* 2005, 104-107
- **Thomsen, L.** Weak elastic anisotropy. *Geophysics,* October 1986, vol. 51 (10), 1954-1966
- **Ristow, D. ; T. Ruhl.** 3-D implicit finite-difference migration by multiway splitting. *Geophysics,* 1997, vol. 62, 554